# EUROPEAN PATENT APPLICATION

(11) **EP 1 959 601 A1**
(43) Date of publication of application: **20.08.2008**
(21) Application number: 07003056.4
(22) Date of filing: 13.02.2007
(51) Int. Cl.: H04L 1/00, H04L 1/18, H04L 29/08

(54) **Retransmission scheme to exchange control information between a gateway and a mobile node**

(71) Applicant: MATSUSHITA ELECTRIC INDUSTRIAL CO., LTD., Osaka 571-8501 (JP)
(72) Inventor: Feuersaenger, Martin, 63225 Langen (DE); Loehr, Joachim, 63225 Langen (DE); Takahisa, Aoyama Matsushita Electric Industrial Co., Ltd., Osaka 540-6319 (JP)
(74) Representative: Grünecker, Kinkeldey, Stockmair & Schwanhäusser Anwaltssozietät

(57) **Abstract**

The invention relates to a method for exchanging control information between a mobile node and a gateway, wherein the control information is exchanged between the mobile node and a radio control entity via two network layers which employ respective retransmission schemes to assure the correct transmission. The use of the retransmission schemes is controlled, e.g. at least one of the retransmission schemes is disabled before actually exchanging the control information. This is achieved for example by resetting a maximum retransmission value or maximum waiting time. Data packets including the control information that are to be transmitted to the mobile node are marked in the gateway, so as to indicate to the radio control entity which retransmission schemes to use. Conversely, by internally recognizing those data packets with control information, the mobile node transmits them to the radio control entity after having decided which retransmission functions to use.

## Description

### FIELD OF THE INVENTION

The invention relates to a method for exchanging control information between a gateway and a mobile node. More specifically, different layers of both entities apply different retransmission schemes on the control information. The invention provides different method steps so as to decide on the use of both schemes to ensure the transmission of the control information. For instance, at most one of both schemes may be used. Furthermore, the invention relates to a network entity and a network control entity, which participate in the invention.

### TECHNICAL BACKGROUND

### Long Term Evolution (LTE)

Third-generation mobile systems (3G) based on WCDMA radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio-access technology that is highly competitive.

However, knowing that user and operator requirements and expectations will continue to evolve, the 3GPP has begun considering the next major step or evolution of the 3G standard to ensure the long-term competitiveness of 3G. The 3GPP launched a Study Item "Evolved UTRA and UTRAN" (E-UTRA and E- UTRAN). The study will investigate means of achieving major leaps in performance in order to improve service provisioning and reduce user and operator costs.

It is generally assumed that there will be a convergence toward the use of Internet Protocols (IP), and that all future services will be carried out on top of IP. Therefore, the focus of the evolution is on enhancements to the packet-switched (PS) domain.

The main objectives of the evolution are to further improve service provisioning and reduce user and operator costs as already mentioned.

More specifically, some key performance and capability targets for the long-term evolution are:
• Significantly higher data rates compared to HSDPA and HSUPA: envisioned target peak data rates of more than 100Mbps over the downlink and 50Mbps over the uplink
• Improved coverage: high data rates with wide-area coverage
• Significantly reduced latency in the user plane in the interest of improving the performance of higher layer protocols (for example, TCP) as well as reducing the delay associated with control plane procedures (for instance, session setup)
• Greater system capacity: threefold capacity compared to current standards.

Another key requirement of the long-term evolution is to allow for a smooth migration to these technologies.

### General Overview of the OSI layer

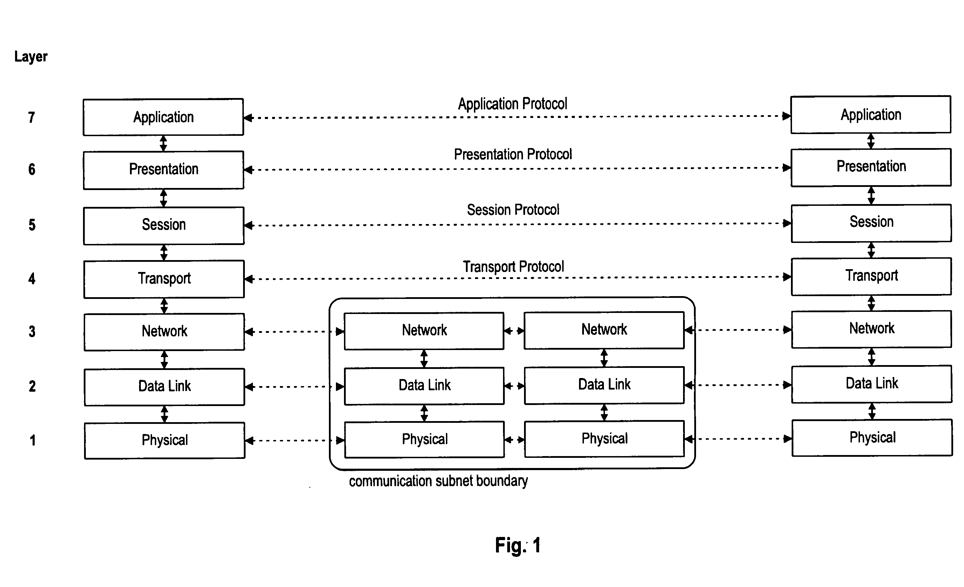

Fig. 1 provides a brief overview on the OSI model on which the further discussion of the LTE architecture is based and based on which also the invention will be discussed herein.

The Open Systems Interconnection Reference Model (OSI Model or OSI Reference Model) is a layered abstract description for communications and computer network protocol design. The OSI model divides the functions of a system into a series of layers. Each layer has the property that it only uses the functions of the layer below, and only exports functionality to the layer above. A system that implements protocol behavior consisting of a series of these layers is known as a 'protocol stack' or 'stack'. Its main feature is in the junction between layers which dictates the specifications on how one layer interacts with another. This means that a layer written by one manufacturer can operate with a layer from another. For our purpose, only the first three layers will be described in more detail below.

The physical layer or layer 1's main purpose is the transfer of information (bits) over a specific physical medium (e.g. coaxial cables, twisted pairs, optical fibers, air interface, etc.). It converts or modulates data into signals (or symbols) that are transmitted over a communication channel.

The purpose of the data link layer (or Layer 2) is to shape the information flow in a way compatible with the specific physical layer by breaking up the input data into data frames (Segmentation And Re-assembly (SAR) functions). Furthermore it may detect and correct potential transmission errors by requesting a retransmission of a lost frame. It typically provides an addressing mechanism and may offer flow control algorithms in order to align the data rate with the receiver capacity. If a shared medium is concurrently used by multiple transmitters and receivers, the data link layer typically offers mechanisms to regulate and control access to the physical medium.

As there are numerous functions offered by the data link layer, the data link layer is often subdivided into sublayers (e.g. RLC and MAC sublayers in UMTS). Typical examples of Layer 2 protocols are PPP/HDLC, ATM, frame relay for fixed line networks and RLC, LLC or MAC for wireless systems.

The network layer or Layer 3 provides the functional and procedural means for transferring variable length packets from a source to a destination via one or more networks while maintaining the quality of service requested by the transport layer. Typically, the network layer's main purposes are inter alia to perform network routing, network fragmentation and congestion control functions. The main examples of network layer protocols are the IP Internet Protocol or X.25.

With respect to Layers 4 to 7 it should be noted that depending on the application and service it is sometimes difficult to attribute an application or service to a specific layer of the OSI model since applications and services operating above Layer 3 often implement a variety of functions that are to be attributed to different layers of the OSI model. Therefore, especially in TCP(UDP)/IP based networks Layer 4 and above is sometimes combined and forms a so-called "application layer".

More information on OSI layer model can be for example found in the textbook "Computer Networks", by Andrew S. Tanenbaum, fourth edition, 2002, Prentice Hall PTR, chapter 1.4 incorporated herein by reference.

As higher layers of a source and a destination are only "logically" connected, that is, there is no real connectivity, it is necessary for the packets to traverse the lower layers, e.g. 2 and 1 to get physically delivered to the destination. Since different protocols are used in each network layer, each data packet passed from e.g. layer 3 to layer 2 has to be appropriately framed.

Accordingly, encapsulation of data packets is usually used to transmit data from an upper layer protocol via a lower layer protocol. For instance, the internet utilizes the IPv4/6 protocol, while most applications use either the User Data Protocol (UDP) or the Transmission Control Protocol (TCP) for data. Consequently, user data is encapsulated in a UDP datagram (layer 4), which is then encapsulated in an IP packet (layer 3). Sequentially, the IP packet, along with the encapsulated user data, may then be transmitted over the data link layer protocol (e.g. Ethernet, layer 2), which again entails an encapsulation. On the receiving end, the process is reversed, with the data traveling back up to the higher layers on the receiving device.

As just explained, there are several sublayers per network layer and each sublayer is responsible for performing a specific task and for dealing with the layers above and below it. A higher layer uses a specific service of the layer immediately below it, wherein conversely a lower layer provides a specific service to the layer immediately above it.

Moreover, it may be the case that some of the services used by different layers employ similar functions. For instance, they may use similar error control methods for the data transmission, so as to ensure a safe and correct transmission of data packets. Therefore, in a case in which a data packet is transmitted by a higher layer using a lower layer service, two similar error control methods can be simultaneously active for the same data transmission.

For instance, two retransmission mechanisms are in effect regarding the same data packet and are not aware of each other. In case the data packet gets lost during the transmission via the lower layer, both mechanisms of the lower layer and higher layer are activated at the same time for retransmitting the same missing data packet. The additional retransmission occupies resources and thereby lowers the performance of the system and has a nonbeneficial influence on the latency.

There may be further scenarios in which even one retransmission of the missing data packet isn't even necessary anymore, e.g. due to changes occurred during the time it takes for the retransmission mechanisms to engage that render the payload of the missing packet irrelevant.

### SUMMARY OF THE INVENTION

Therefore, in view of the above problems in the state of the art, one object of the invention is how to improve the use of the retransmission schemes used by different layers for the same data.

The object is solved by the subject matter of the independent claims. Advantageous embodiments of the invention are subject-matters of the dependent claims.

One aspect of the invention may be to control the use of retransmission for those data packets that contain control information from higher layers. In more detail, as two separate retransmission functions corresponding to two different layers are active for the same data, it is advantageous to be able to deactivate one or both retransmission functions, though in some scenarios both retransmission functions can be maintained active at the same time. Thereby, unnecessary retransmissions of missing data packets may be avoided, as the functions may be controlled depending on the actual necessity for retransmission.

Another aspect of the invention may relate to the way in which necessary information to control the use of retransmission is conveyed along with the data packet comprising the control information. In particular, data packets that contain control information are marked with an indicator. The indicator may either instruct the transmitting entity how to use the two retransmission schemes, or may contain information, which allows the transmitting entity to decide for itself how to use the retransmission functions.

One embodiment of the invention provides a method for exchanging control information between a gateway and a mobile node via a radio control entity. In particular, a first retransmission function and a second retransmission function are used between the radio control entity and the mobile node for ensuring the exchange of the control information. At first, a decision is made on the use of the first retransmission function and on the use of the second retransmission function for each data packet comprising the control information that is exchanged between the radio control entity and the mobile node.

In a different embodiment of the invention the data packets comprising the control information are exchanged between the radio control entity and the mobile node by using at most one of the first and second retransmission function. By using only one retransmission function for the same data unnecessary retransmissions may be avoided and the network performance may be increased thereby.

According to another advantageous embodiment of the invention, the first and second retransmission functions respectively correspond to a first and second protocol sublayer of the radio control entity and the mobile node. Additionally, the control information is encapsulated by the first protocol sublayer and exchanged between the radio control entity and the mobile node via the second protocol sublayer. Further, the second retransmission function is used between the radio control entity and the mobile node for ensuring the exchange of data, the data comprising the control information.

Another embodiment of the invention relates to the gateway, which includes an indicator in the data packets comprising the control information, before transmitting the data packets to the radio control entity. For instance, the indicator provides an indication about the use of retransmission for the control information. Upon receiving the data packets comprising the control information, a decision is made regarding the use of the first and second retransmission function based on the indicator in the data packets.

Then, the data packets are forwarded by the radio control entity to the mobile node by using the decided first retransmission function and the second retransmission function. The intermediate node is thereby easily and effectively enabled to use the retransmissions functions, due to a simple indicator in the relevant data packets.

In a further embodiment of the invention the indicator is included in the data packets by a third protocol sublayer of the gateway used for transmitting the data packets from the gateway to the radio control entity.

According to a different embodiment of the invention, the indicator indicates that the data packet comprises the control information. In addition, the radio control entity recognizes the data packet comprising the control information, based on the indicator in the data packet. Depending on the decision on the use of the first and second retransmission function, at least one of the first and second retransmission functions for ensuring the transmission of the recognized data packet comprising the control information is avoided, before forwarding the recognized data packet to the mobile node.

In a still more advantageous embodiment of the invention the first retransmission function in the radio control entity waits for a predetermined time to receive from the mobile node an acknowledgment indicating that the data packet comprising the control information has been received, before retransmitting the data packet comprising the control information to the mobile node. Thus, by setting the predetermined time to an infinite time value the first retransmission function is avoided. This may be easily implemented in a transmitting entity.

Another embodiment of the invention relates to the fact that the second retransmission function in the radio control entity is an Automatic Repeat Request function and that a maximum retransmission counter limits the number of possible retransmissions for a missing data packet that has not been received in the mobile node. Consequently, by setting the maximum retransmission counter to zero the second retransmission function is avoided.

In a different embodiment of the invention the second protocol sublayer in the radio control entity utilizes a first data channel for transmitting data to the mobile node, wherein the first data channel uses the second retransmission function to ensure the transmission of data to the mobile node.

The second retransmission function in the radio control entity is avoided by utilizing a second data channel by the second protocol sublayer for transmitting the data packet comprising the control information to the mobile node, wherein the second data channel does not use the second retransmission function.

Another embodiment of the invention concerns the establishment of the second data channel in case no data channel is available to the second protocol sublayer that does not use the second retransmission function upon recognizing the data packet comprising the control information.

According to a still another embodiment of the invention, the first data channel is a Signalling Radio Bearer in Acknowledged Mode and the second data channel is a Signalling Radio Bearer in Unacknowledged Mode.

In an additional embodiment of the invention the second protocol sublayer utilizes the second data channel for transmitting the data packet comprising the control information after switching the Acknowledged Mode of the Signalling Radio Bearer to the Unacknowledged Mode.

In a more detailed embodiment of the invention, the indicator in the data packets is a flag or a message type, which is included in a header of the data packets comprising the control information. A flag or message type may be included into usual fields in a header of a data packet, wherein no extra data has to be transmitted in said respect, and no additional overhead is created.

A different embodiment of the invention relates to the fact that the indicator in the data packets comprising the control information informs the radio control entity about the decision on the use of the first and second retransmission functions for transmitting the data packets comprising the control information to the mobile node. In this case, the decision on the use of the first and second retransmission functions is made in the gateway, wherein the radio control entity does not need to implement additional functionality in said respect.

In another embodiment of the invention the mobile node generates data packets comprising the control information. Then, during the generation of the data packets, the data packets comprising the control information are identified, and the mobile node decides on the use of the first retransmission function and the second retransmission function for ensuring the transmission of the control information from the mobile node to the radio control entity.

No marking of data packets is necessary when control information is to be transmitted from the mobile node to the gateway, as the mobile node is adapted to internally recognize the relevant data packets and apply a retransmission scheme according to the chosen decision.

According to a further embodiment, the decision on the use of the first retransmission function and the second retransmission function is made in the first or second protocol sublayer.

In another embodiment of the invention in case the decision on the use of the first retransmission function and the second retransmission function is made in the second protocol sublayer, it is necessary to request information about the control information from the first protocol sublayer. Correspondingly, the decision is based on the requested information about the control information.

An embodiment of the invention provides a radio control entity for forwarding control information. The control information is exchanged between a gateway and a mobile node via the radio control entity and a first retransmission function and a second retransmission function are used between the radio control entity and the mobile node for ensuring the exchange of the control information. A processor in the radio control entity decides on the use of the first retransmission function and the second retransmission function for each data packet comprising the control information that is transmitted to the mobile node.

According to a different embodiment of the invention, a receiver in the radio control entity receives data packets comprising the control information and further comprising an indicator in the data packets. The indicator provides an indication about the use of retransmission for the control information. Furthermore, the processor in the radio control entity recognizes the data packets comprising the control information, based on the indicator, and avoids at least one of the first and second retransmission functions, based on the decision on the use of the first and second retransmission function. Subsequently, a transmitter of the radio control entity is adapted to forward the data packets to the mobile node.

Another embodiment of the invention provides a mobile node for exchanging control information with a gateway via a radio control entity. A first retransmission function and a second retransmission function are used between the radio control entity and the mobile node for ensuring the exchange of the control information. A processor in the mobile node decides on the use of the first retransmission function and the second retransmission function for each data packet comprising the control information that is transmitted to the gateway.

In a different embodiment of the invention the processor in the mobile node generates data packets comprising the control information. During the generation of the data packets the processor identifies the data packets comprising the control information. The processor then avoids at least one of the first and second retransmission functions, based on the decision on the use of the first and second retransmission function. Subsequently, a transmitter in the mobile node transmits the data packets comprising the control information to the radio control entity.

An embodiment of the invention provides a gateway for exchanging control information with a mobile node via a radio control entity. A first retransmission function and a second retransmission function are used between the radio control entity and the mobile node for ensuring the exchange of the control information. A processor in the gateway decides on the use of the first retransmission function and the second retransmission function for each data packet comprising the control information that is transmitted to the mobile node.

According to an advantageous embodiment of the invention, the processor generates data packets comprising the control information. In addition, the processor includes an indicator in the data packets comprising the control information, wherein the indicator provides an indication about the decision on the use of the first and second retransmission function. Then, a transmitter in the gateway transmits the data packets comprising the control information to the radio control entity.

A different embodiment of the invention provides a data packet comprising control information exchanged between a gateway and a mobile node via a radio control entity. In particular, a first retransmission function is used between the radio control entity and the mobile node for ensuring the exchange of the control information, and a second retransmission function is used between the radio control entity and the mobile node for ensuring the exchange of the data packet. The data packet comprises a header section and a payload section, wherein the payload section includes the control information and the header section includes an indicator that provides an indication about the use of the first and second retransmission function.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows an overview on the OSI Layer model,
- **Fig. 2**: shows an exemplary overview on the functional entities and interfaces in the architecture of an LTE-UMTS communication system,
- **Fig. 3**: shows the relation of service data units (SDUs) and protocol data units (PDUs) in the OSI Layer model
- **Fig. 4**: shows an exemplary protocol stack of the control plane in an LTE-UMTS communication system,
- **Fig. 5**: shows an exemplary layer structure that might be used in LTE-UMTS communication systems,
- **Fig. 6**: shows an exemplary Layer 2 structure in an eNode B for the transmission of NAS messages to the mobile node,
- **Fig. 7**: is a signaling diagram between the gateway and the mobile node, in which a duplicate retransmission of RRC Direct Transfer messages is illustrated,
- **Fig. 8**: is another signaling diagram between the gateway and the mobile node, in which an irrelevant retransmission of RRC Direct Transfer messages is illustrated,
- **Fig. 9**: depicts a usual header according to a GTP protocol, and
- **Fig. 10**: illustrates a modified header of a GTP protocol according to an embodiment of the invention.

### DETAILED DESCRIPTION

The following paragraphs will describe various embodiments of the invention. For exemplary purposes only, most of the embodiments are outlined in relation to a 3GPP-LTE communication system according to the discussion in the Background Art section above and later on. It should be noted that the invention may be advantageously used for example in connection with a mobile communication system such as the 3GPP-LTE communication system, but the invention is not limited to its use in this particular exemplary communication network.

The explanations given in the Technical Background section above are intended to better understand the mostly 3GPP specific exemplary embodiments described herein and should not be understood as limiting the invention to the described specific implementations of processes and functions in the mobile communication network. Nevertheless, the improvements proposed herein may be readily applied in the architectures/systems described in the Technological Background section and may in some embodiments of the invention also make use of standard and improved procedures of theses architectures/systems.

### Definitions

In the following a definition of several terms frequently used in this document will be provided.

A **mobile node** is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or correspondent nodes.

Control information relates to information from higher layers that may be transmitted for Mobility Management, Call Management and Session Management for example. Naturally, a skilled person may be aware of further control information that is necessary to be exchanged from higher layers.

### LTE architecture

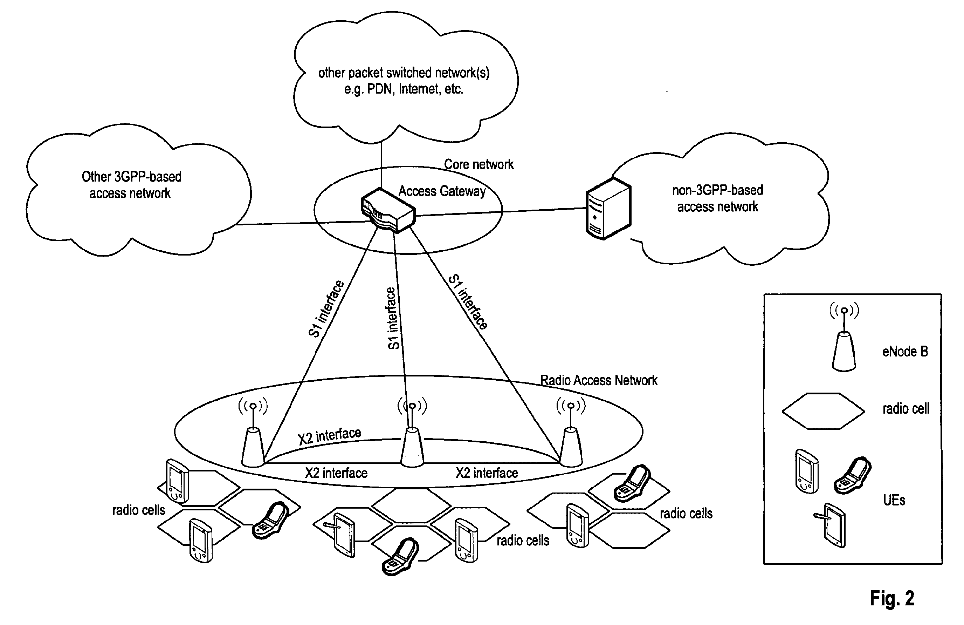

More specifically, in Fig. 2 an overview of a 3GPP LTE mobile communication network is shown. The network consists of different network entities that are functionally grouped into the Core Network (CN), the Radio Access Network (RAN) and the User Equipments (UEs) or mobile terminals.

The RAN is responsible for handling all radio-related functionality inter alia including scheduling of radio resources. The CN may be responsible for routing calls and data connections to external networks.

The LTE network is a "two node architecture" consisting of Access Gateways (Access Gateway) being part of the CN and eNode Bs (eNode B) that are part of the RAN. The Access Gateway will handle CN functions, such as routing calls and data connections to external networks, and may also implement some RAN functions. Thus, the Access Gateway may be considered as to combine functions performed by GGSN and SGSN in today's 3G networks and RAN functions as for example header compression, ciphering/integrity protection. The eNode Bs may handle functions such as for example Radio Resource Control (RRC), segmentation/concatenation, scheduling and allocation of resources, multiplexing and physical layer functions.

A mobile communication network is typically modular and it is therefore possible to have several network entities of the same type. The interconnections of network elements are defined by open interfaces. UEs can connect to an eNode B via the air interface the so-called Uu interface. The eNode Bs have a connection to an Access Gateway via the so-called S1 interface. Two eNode Bs are interconnected via the so-called X2 interface.

Both 3GPP and Non-3GPP integration may be handled via the Access Gateway's interface to the external packet data networks (e.g. Internet).

### Layer Services and Encapsulation

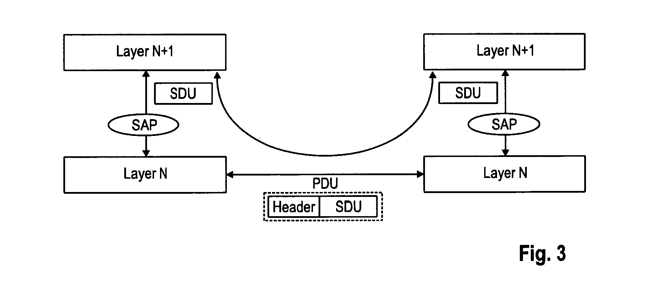

Before discussing the invention in further detail, the terms service data unit (SDU) and protocol data unit (PDU) as used herein are defined in connection with Fig. 3. In order to formally describe in a generic way the exchange of packets between layers in the OSI model, SDU and PDU entities have been introduced. An SDU is a unit of information (information block) transmitted from a protocol at the layer N+1 that requests a service from a protocol located at layer N via a so-called service access point (SAP). A PDU is a unit of information exchanged between peer processes at the transmitter and at the receiver of the same protocol located at the same layer N.

A PDU is generally formed by a payload part consisting of the processed version of the received SDU(s) preceded by a layer N specific header and optionally terminated by a trailer. Since there is no direct physical connection (except for Layer 1) between these peer processes, a PDU is forwarded to the layer N-1 for processing. Therefore a layer N PDU is from a layer N-1 point of view an SDU.

As has been previously indicated, for example if unreliable transport has to be used to pass SDUs of Layer N+1 to Layer N for further transport in form of PDUs some of the SDUs may get lost. If the receiver receives the Layer N PDUs and extracts the SDUs transported therein, the receiver may recognize the missing SDU(s) and may trigger its/their retransmission, which impacts the system performance by additional transport.

Therefore, it might be the case that a retransmission function provided by a Layer N+1 for a Layer N+1 PDU is active and simultaneously a further retransmission function provided by a Layer N for a Layer N PDU is active as well. Furthermore, the Layer N PDU comprises the Layer N+1 PDU, which logically is the Layer N SDU. In other words, in case data is transmitted from the Layer N+1 by using transport services of Layer N, two retransmission schemes are enabled at the same time to guarantee the correct transmission of the same data. Consequently, when the Layer N PDU gets lost during the transport to the other Layer N of the receiving entity, both retransmission functionalities engage in order to retransmit the missing data, which is the Layer N+1 PDU and the Layer N PDU, this later one comprising the Layer N+1 PDU.

In order to discuss one embodiment of the invention, it is assumed that control information from higher layers is exchanged between a gateway of the core network and a mobile node. The corresponding radio control entity that is responsible for the network area to which the mobile node is currently attached, is located in between the gateway and the UE. The radio control entity uses Layer N+1 and Layer N to forward the received control information to the mobile node, as discussed above.

For instance, according to the embodiment of the invention the gateway may still transmit the control information to the radio control entity as usual. However, the radio control entity is enabled to recognize the data packets containing the control information and is further enabled to control which of the retransmission functions of the respective layers N+1 and N to use for ensuring the transmission of the data packet including the control information to the mobile node. Accordingly, the radio control entity advantageously may e.g. decide to use only one of the two available retransmission schemes, thereby potentially saving radio resources caused by missing data packets. This might be done by avoiding the retransmission function, which the radio control entity has decided against for transmitting the control information. For instance, the radio control entity might decide to disable the retransmission task of Layer N+1, thus only maintaining the retransmission function of Layer N active for the control data within the Layer N PDU. Conversely, the radio control entity might also decide to use the retransmission function of Layer N+1 and to avoid the one offered by Layer N.

There might be further scenarios in which it is advantageous to disable both retransmission functions, that is, to avoid at all the retransmission of the missing data packets. Such a case may be when the control information within the Layer N PDUs that got missing has become irrelevant or moot due to changes that happened from the start of the transmission for the period of time it takes the two retransmission schemes to detect the missing data and to engage so as to rectify said transport failure.

It is further advantageous that the gateway includes an indicator within the data packets to be transmitted to the radio control entity so as to provide the radio control entity with the necessary information to recognize the data packets and to decide on how to use the two retransmission schemes. Accordingly, said indicator may e.g. provide information about the data packet comprising control information. Alternatively, the indicator may even include an instruction for the radio control entity about which retransmission functions to use, whereas in said case the decision on their use has already been made in the gateway which would thus include the corresponding indicator in the data packets.

Moreover, a similar procedure applies to control information that is transmitted from the mobile node to the gateway. In said case the mobile node internally adapts the retransmission schemes of the Layers N+1 and N. In other words, the control information is transmitted within a Layer N+1 PDU and subsequently using the transport service of Layer N, same as with the transmission from the radio control entity to the mobile node as discussed above. The mobile node then internally recognizes the relevant data packets comprising the control information and decides on the use of the available retransmission functionalities of the two layers. Consequently, the mobile node might e.g. decide to use only the transport error correction of Layer N+1 and thus avoids the transport error correction of Layer N when transmitting said recognized data packets. Similarly, the mobile node might also decide the other way round or to not use an error correction at all.

A more detailed discussion on further embodiments of the invention is provided in the following by implementing the general principles of the invention into the LTE-UMTS network structure and into a specific example in which upper layer messages are transmitted from an aGW to a UE. However, it should be noted that the general principles as just explained and specified in the claims are not restricted to the following exemplary scenario but may be applicable to further network structures and different situations.

### Layer structure and Data Flow in LTE

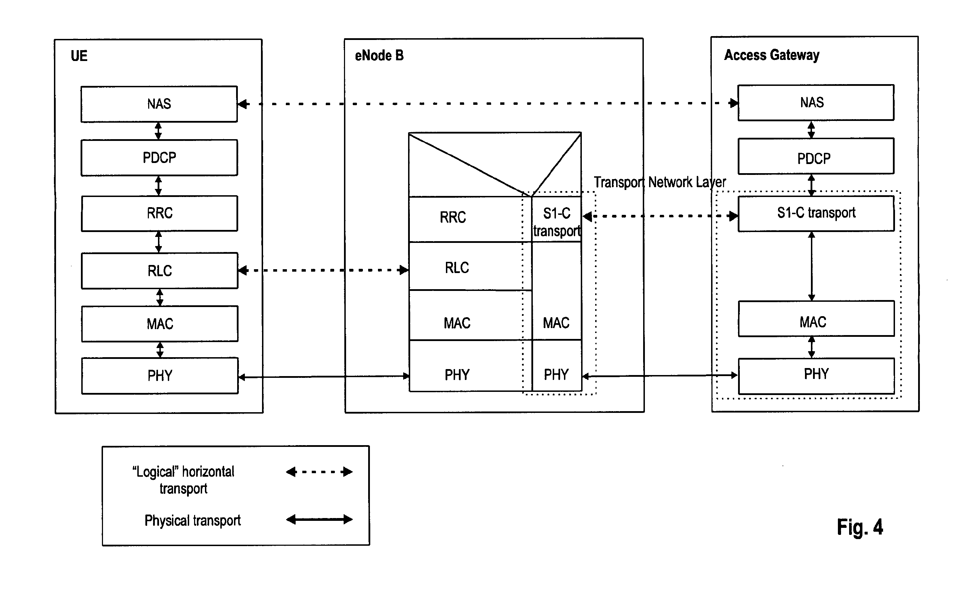

Fig. 4 shows an exemplary user-plane protocol stack in an LTE-based UTRAN. Layer 2 may be split in Medium Access Control (MAC), Radio Link Control (RLC) and Packet Data Convergence Protocol (PDCP), wherein the RLC sublayer is terminated in eNode B at network side. The PDCP layer and NAS layer are terminated in the Access Gateway at network side. The S1-C transport layer between the aGW and the eNode B forms the Transport Network Layer together with a MAC and a Physical layer specifically adapted to the transport medium between the entities.

The major part of the control signaling between a mobile node (MN or also referred to as User Equipment UE) and the Core Network is done by Radio Resource Control (RRC) messages. The RRC protocol is located in Layer 3 and provides functions for UE specific signaling, paging of idle mode UEs and system information broadcast. The RRC layer also supports retransmission function to assure the correct transmission of control information of higher layers.

Amongst others, higher layer Non Access Stratum (NAS) messages are routed by the RRC, piggybacked into an RRC Direct Transfer message, to different entities in the UE and the Core network. The Non Access Stratum is a functional layer running between the UE and the Core Network (CN) and located above RRC. Furthermore, the NAS is the functional grouping of protocols aimed at Call Control (CC) for circuit switched voice and data, at Session Management (SM) for packet switched data and Mobility Management (MM) and at Short Message Services (SMS) for packet switched and circuit switched domains. The control messages the NAS layer generates are called NAS messages. Such messages are for example used to control Mobility Management, Session Management and Call Management. NAS messages are transported transparently through the Access Stratum layers (layers 3-2-1) that include the function and protocols to support the NAS by transporting information across the network and air interface.

The Access Stratum is the functional grouping of protocols specific to the access technique. It includes protocols for supporting transfer of radio-related information, for coordinating the use of radio resources between UE and access network, and for supporting access from the serving network to the resources provided by the access network. The Access Stratum offers services through Service Access Points (SAP) to the Non-Access Stratum (CN-related signaling and services), i.e. provides the Access Link between UE and CN, which consists of one or more independent and simultaneous UE-CN radio access bearer services, and only one signaling connection between the upper layer entities of UE and CN. The one signaling connection between the upper layer entities of UE and CN is the most relevant for the invention and consists of two parts - the RRC connection and the lu connection, which expands the RRC signaling connection towards the CN. In particular, the RRC connection is between the eNB and the UE, and the lu connection is the depicted S1 interface between eNB and the aGW.

In more detail, a logical transport of NAS messages occurs by exchanging corresponding NAS messages between the aGW and the UE, as depicted by the respective dashed line in Fig. 4. However, in order for the NAS messages to be physically delivered, it is necessary to traverse several lower sublayers. The PDCP layer provides its services to the NAS and correspondingly receives the PDCP SDUs, which are the NAS messages. In turn, the PDCP layer forms PDCP PDUs and uses the available transport layer protocol of the S1-Control Plane to transmit the S1-C transport SDUs via the S1 interface to the eNB. Stream Control Transmission Protocol (SCTP) may be the transport layer protocol that is to be used for point-to-point data transfer on S1-C interface. Alternatively, the transport services may also be provided by a GTP-C protocol sublayer (GPRS Tunnel Protocol-Control).

Accordingly, the S1-C transport PDUs are then physically delivered via lower layers (PHY and MAC) to the eNB and then passed up to the corresponding S1-C transport layer in the eNB. As described above, the NAS messages are then piggybacked in RRC Direct Transfer (DT) messages, so as to be transmitted to the UE. More specifically, those RRC DT messages are transmitted over a Radio Bearer of the RLC layer to the MN. Correspondingly, the RLC PDUs are received in the UE and passed up to the NAS layer, thereby finishing the logical transfer between the NAS layers of the aGW and the UE.

Conversely, the NAS layer of the UE also transfers NAS messages to the aGW via the eNB. In summary, the NAS messages are transmitted in RRC Direct Transfer messages using the Radio Bearer Service provided by the RLC layer to the eNB. Subsequently, the RLC PDUs are transformed into the S1-C transport PDUs in order to transport them to the aGW. Upon receiving the S1-C transport PDUs comprising the NAS messages the aGW passes it up to the corresponding NAS layer.

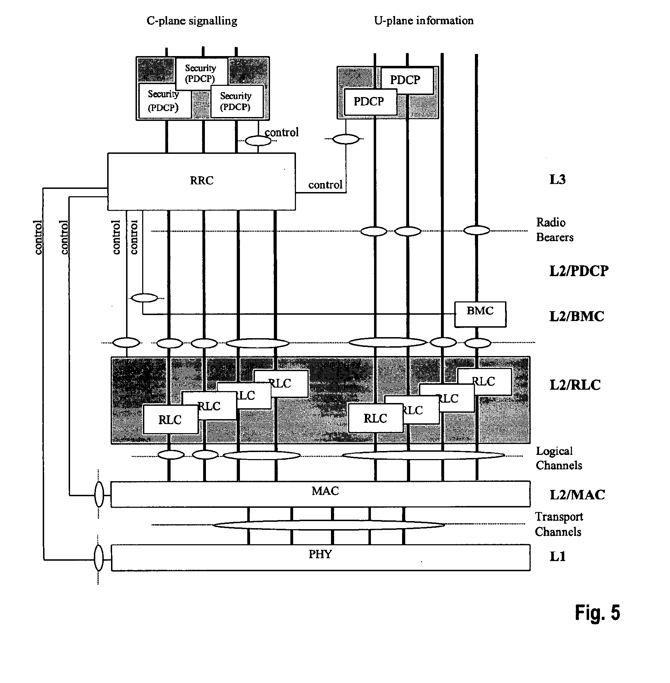

In order to better understand the interconnection between the different layers that are relevant for the invention, Fig. 5 illustrates an exemplary layer structure as it might be employed in LTE-UMTS systems.

The RRC layer provides functions to control lower layer functionality. It also receives control messages from higher layers and controls their transparent transport through lower layers. RRC also provides methods for retransmission of messages in case of transmission failure. Retransmissions of RRC messages are e.g. timer based, that is, after expiration of a certain timer event, RRC retransmits a RRC DT message if there was no appropriate message from receiver side that confirmed the reception of the message.

In the control plane the PDCP layer entities provide security functions to protect the transport over the Transport Network Layer, composed of the S1-C transport layer, MAC and Physical layer.

In the following we provide more information on the operation of the RLC protocol layer. The radio link control protocol is the Layer 2 protocol used in cellular systems for the transport of upper layer PDUs, i.e. IP Packets, received from PDCP layer in Access Gateway and for error recovery for both user and control data.

An RLC SDU may be e.g. a PDCP PDU (including a PDCP header). The RLC layer includes segmentation and concatenation functionality as already described before. Therefore an RLC PDU can be (or contain) one (or several) segment(s) of one (or several) RLC SDU(s).

There are three operational modes for RLC: Transparent Mode (TM), Unacknowledged Mode (UM) and Acknowledged Mode (AM). Each RLC entity is configured by RRC to operate in one of these nodes. The service the RLC layer provided in the control plane is called Signaling Radio Bearer (SRB). In the user plane, the service provided by RLC layer is called a Radio Bearer (RB).

In **Transparent Mode** no protocol overhead is added to RLC SDUs received from higher layer. In special cases transmission with limited segmentation/reassembly capability can be accomplished. It has to be negotiated in the radio bearer setup procedure, whether segmentation/reassembly is used. The transparent mode is e.g. used for very delay-sensitive services like speech.

In **Unacknowledged Mode** data delivery is not guaranteed since no retransmission protocol is used. The PDU structure includes sequence numbers for integrity observations in higher layers. Segmentation and concatenation are provided by means of header fields added to the data. The RLC entity in Unacknowledged mode is unidirectional, since there are no associations defined between uplink and downlink. If erroneous data is received, the corresponding PDUs are discarded or marked depending on the configuration. In the transmitter, the RLC SDUs which are not transmitted within a certain time specified by a timer are discarded and removed from the transmission buffer. The RLC SDUs, received from higher layer, are segmented/ concatenated into RLC PDUs on sender side. On receiver side reassembly is performed correspondingly. The unacknowledged mode is used, for example, for certain RRC signaling procedures. Examples of user services are the cell broadcast service (e.g. MBMS) and voice over IP (VoIP).

In **Acknowledged Mode** the RLC layer supports error correction by means of an Automatic Repeat Request (ARQ) protocol. RLC retransmissions are for example based on RLC status reports, i.e. ACK/NACK, received from the peer RLC receiving entity. The acknowledged mode is designed for a reliable transport of packet data through retransmission in the presence of high air interface bit error rates. In case of erroneous or lost PDUs, retransmission is conducted by the sender upon reception of a status report from the receiver.

ARQ is used as a retransmission scheme for retransmission of erroneous or missed PDUs. The status report can e.g. be polled by the sender or self-triggered, i.e. upon detection a break in the sequence numbers order. The receiver sends a status report to the sender when triggered. The report typically indicates the reception status (either ACKs or NACKs) within the receiving window and up to the last received PDU.

An acknowledged mode RLC can be configured to provide both in-sequence and out-of sequence delivery to higher layers. As already mentioned before, in addition to data PDU delivery, status and reset control PDUs can be signaled between the peer entities. The acknowledged mode is the default mode for packet-type services, such as interactive and background services.

In summary, the main services and functions of the RLC sublayer include:
• Transfer of upper layer PDUs supporting AM, UM or TM data transfer;
• Error Correction through ARQ;
• Segmentation according to the size of the TB;
• Resegmentation when necessary (e.g. when the radio quality, i.e. the supported TB size changes)
• Concatenation of SDUs for the same radio bearer is FFS;
• In-sequence delivery of upper layer PDUs;
• Duplicate Detection;
• Protocol error detection and recovery;
• SDU discard
• Reset.

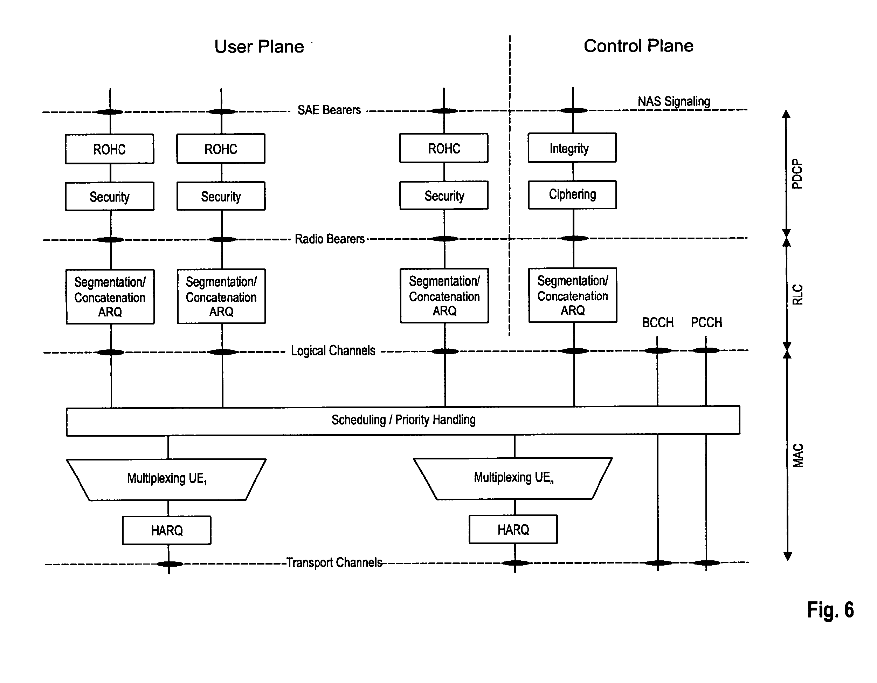

The functions of the Layer 2 sublayers are outlined in more detail in the following when the data flow is described for the downlink case for control information passed from the eNB to the UE. Fig. 6 shows the Layer 2 Structure for the downlink in eNode B and aGateway. Higher layer PDUs including the NAS control information are received at the PDCP layer. The PDCP sublayer can perform header compression (ROHC) and security operations such as ciphering as well as Integrity Protection (IP). For security operations a PDCP Sequence number is attached to every PDCP PDU passed to the RLC layer. This sequence number can be also used for reordering purpose, i.e. in order to provide in sequence delivery to higher layer. The PDCP PDUs are then forwarded to RLC layer in eNode B via the S1 interface.

This comprises the use of the available S1-C transport protocol in order to transport the PDCP PDUs within S1-C transport PDUs to the S1-C transport layer in eNB. Upon decapsulating the S1-C transport PDUs, the resulting PDCP PDUs are processed by the RRC layer. That is, the PDCP PDUs are encapsulated in an RRC Direct Transfer message and are to be transmitted using the RLC signaling radio bearers.

In particular, RLC SDUs, i.e. the PDCP PDUs comprising the NAS control information are segmented and/or concatenated into RLC PDUs. Each RLC PDU is assigned a sequence number in order to support reordering functionality on receiving side.

The forming of RLC PDUs is for example based on the selected transport block size by the scheduler and QoS attributes of the radio bearers. Depending on the data transfer mode of the RLC entity the RLC layer supports error correction by means of an ARQ protocol. The RRC layer configures the RLC layer to transmit the RRC DT messages, including the NAS control information, via a Signaling Radio Bearer in Acknowledged mode, therefore using the ARQ protocol. For instance, RLC retransmissions are for example based on RLC status reports, e.g. ACK/NACK, received from the peer RLC receiving entity. The RLC PDUs are then passed to the MAC layer via logical channels.

The MAC layer comprises the scheduling and priority handling functionality, which manages physical channel resources between logical channels of one UE and between UEs according to their priority. RLC PDUs from different logical channels can be multiplexed into one Transport Block. The scheduler determines the Transport Block size considering for example reported channel quality, scheduling related control information, i.e. buffer status, received from UEs and QoS attributes of the scheduled logical channels. Finally MAC passes the generated Transport Blocks to the physical layer, which is responsible for the transmission over the radio channel.

The corresponding operation at the receiving side of UE is described in the following.

Correctly received Transport Blocks are demultiplexed into corresponding RLC PDUs. At RLC layer RLC SDUs are reconstructed according to the segmentation/concatenation information.

In sequence, delivery to higher layers is ensured and missing data is requested for retransmission. Reordering is done per logical channel. RLC PDU loss detection capability is provided for example based on a simple receiving sliding window mechanism. The detection of a lost RLC PDU may for example trigger a retransmission request of ARQ protocol at RLC layer for AM data transmission mode, as described in more detail below. Reassembled IP packets are then delivered to the RRC layer and the to the PDCP layer. At the PDCP Layer, IP header information is reconstructed and deciphering of data is performed before SDUs are passed on to higher layers, e.g. NAS.

In summary, control information from upper layers e.g. NAS are piggybacked in RRC Direct Transfer messages of the RRC layer and transmitted between the UE and the eNode B via an RLC Signaling Radio bearer provided by the RLC layer to the RRC layer. As both layers separately offer a retransmission function, said NAS messages are exchanged with two retransmission capabilities active. For instance, in case a RLC PDU containing the RRC PDU gets lost via the air interface between the UE and the eNB, the RLC first and the RRC second realize that no acknowledgment has been received from the other receiving entity, be it the UE or eNB, for the respective RLC and RRC PDU. Consequently, their error correction mechanisms engage and the RLC layer retransmits the missing RLC PDU. Simultaneously, the RRC layer transmits another identical RRC PDU via the RLC SRB. Therefore, two retransmissions for the same missing data have been effected, which is for most cases disadvantageous as it increase the traffic load on the bandwidth-critical air interface and thus reduces the network performance.

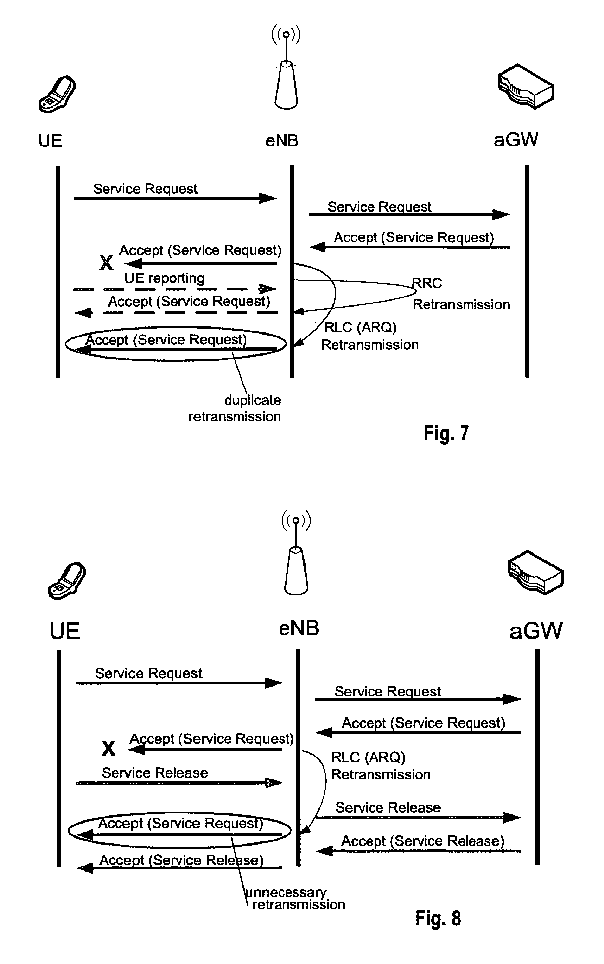

An exemplary situation is depicted in the signaling diagram of Fig. 7, in which a duplicate retransmission is effected. A Service Request containing a NAS message is transmitted from the UE via the eNB to the aGW. The aGW transmits the reply service request accept also containing a NAS message to the UE. However, this message gets lost on the air interface between the eNB and the UE. An RRC status report signal from the UE indicates that the Service Request Accept was not received and a retransmission is initiated by RRC. During the same time a NACK reporting for the missing RLC PDU triggered a retransmission by the ARQ protocol in the RLC layer. Apparently, this is a duplicate retransmission of the same missing packet.

According to an embodiment of the invention, such a duplicate retransmission may be avoided. As just explained, the aGW transmits higher layer control information to the UE. This is done by the transmitting the control information to the eNB via the available S1-C transport protocol, which may be for example the GTP-C.

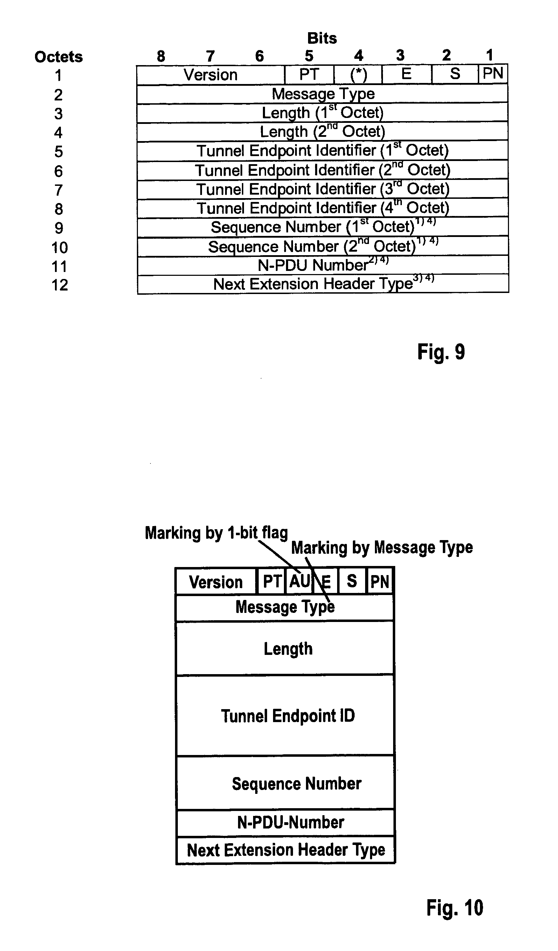

Fig. 9 shows a usual header used for the GTP Tunneling protocol. The GTP header is a variable length header used for both the GTP-C and the GTP-U protocols. The minimum length of the GTP header is 8 bytes. There are three flags that are used to signal the presence of additional optional fields: the PN flag, the S flag and the E flag. The PN flag is used to signal the presence of N-PDU Numbers. The S flag is used to signal the presence of the GTP Sequence Number field. The E flag is used to signal the presence of the Extension Header field, used to enable future extensions of the GTP header, without the need to use another version number. If one or more of these three flags are set, the fields Sequence Number, N-PDU and Extension Header are present. The sender sets all the bits of the unused fields (e.g. Bit 4) to zero and the receiver will usually not evaluate the unused fields.

As mentioned above, the aGW uses the GTP-C tunneling protocol to send the NAS messages to the eNB. Advantageously, the GTP-C layer includes an indicator in the data packets. Two possible indicators are shown in Fig. 10. One possibility is to use the empty flag at bit position 4 to include an 1-bit AU flag, wherein AU may stand for ARQ Usage.

Another option would be to include appropriate information in the special message type field. Advantageously, both options will not create any additional overhead in the example protocol header of GTP-C as they use space that is already part of the usual GTP header.

It should be noted that this two options are mere possibilities how necessary information may be passed from the aGW to the eNB. Therefore, a skilled person is able to consider other options, so as to inform the eNB which received packets contain the NAS control information or how to use the retransmission functions for said packets containing the control information.

For instance, according to one embodiment of the invention, the aGW realizes that it is about to send data packets with NAS control information and decides on which retransmission function(s) to use in the eNB for transmitting the control information to the UE. Depending on the decision, the aGW includes an indicator in said data packets that provides information about the decision. Thereby, the aGW instructs the eNB to use e.g. only the retransmission function provided by the RRC layer and thus avoid the ARQ function of the RLC layer for the transmission of the marked packets. In more detail, the RRC layer of the eNode B recognizes the marked data packets and further derives from the indicator which retransmission scheme to use. In correspondence therewith, the RRC layer disables the ARQ function of the RLC layer, wherein only the retransmission function of the RRC layer remains active for potential missing data packets comprising the control information.

According to another embodiment of the invention, the decision about the use of the retransmission function(s) may be performed in the eNB instead of the aGW. In said case, the aGW includes an indicator into the data packets, that only provides an indication that the marked data packets comprise control information that are to be transmitted via the RRC and RLC layers. For example, the aGW, i.e. the GTP-C layer, may include the 1-bit flag or message type as discussed in relation to Fig. 10. These marked GTP-C PDUs are transmitted to the eNB and appropriately forwarded to the RRC layer therein. The RRC layer in the eNB is thus able to recognize those data packets that contain the control information, for which the use of the retransmission function(s) is to be decided.

In case the RLC layer takes the decision about which retransmission functions to use, the RRC layer marks the RRC DT messages, similar to the way the GTP-C marked the GTP-C PDUs. This might also be done by a corresponding flag in the header of the RRC DT messages, or by any other appropriate method known to the skilled person which achieves the same result. For instance, the RRC layer could inform the RLC via other signaling channels on which RLC SDUs contain the control information, in which case the marking of the RRC DT messages would be of course unnecessary. Accordingly, the RRC layer passes the marked RRC PDUs to the RLC layer, which recognizes the RLC SDUs comprising the NAS control information e.g. based on the indicator in the header of the received SDUs. Then, the RLC layer would make a decision regarding the two retransmission functions and accordingly would either instruct the RRC layer to disable its retransmission function or disable its own ARQ retransmission capability for ensuring the transmission of the RLC PDUs comprising the control information.

Alternatively, the RRC layer may also control the use of the two retransmission schemes for the marked messages instead of the RLC layer. For example, the RRC layer decides to avoid the retransmission function ARQ of the RLC layer for the specific control information. Therefore, before actually transmitting the NAS control information piggybacked within the RRC DT messages via the RLC layer, the RRC layer configures the RLC layer such that the ARQ function of the RLC layer is bypassed for the data packets comprising the control information. On the other hand, the RRC layer may also decide to circumvent its own retransmission function and maintain the ARQ function provided by the RLC layer. In either case, when an RLC PDU with the NAS control information gets lost, only one of both retransmission functions will engage to remedy the transport error. Thus, while still assuring the correct transmission of the control information to the UE, radio resources are saved, as only one retransmission of the missing RLC PDU will take place.

Naturally, the same problems with duplicate retransmissions arise when the UE transmits higher layer NAS messages to the aGW. Correspondingly, NAS messages are transported in RRC DT messages via a Signaling Radio Bearer from the UE to the eNB. Usually, both retransmission functions are activated for the NAS messages, that is the RRC retransmission function and the ARQ function of the RLC layer. In case, the RLC PDU gets lost both functions engage and a duplicate retransmission takes place. A similar approach to above is proposed to avoid this.

However, no indicator in the data packets is necessary compared to the embodiments as described in connection with Fig. 10, because the RRC layer in the UE realizes for itself that it is about to encapsulate NAS control information to be forwarded to the RLC layer. This results from the fact that the higher layers are in the same entity as the RRC layers, wherein no interface (e.g. S1 interface) is present and no indicator has to be included. Subsequently, it decides on which retransmission schemes to use to ensure the safe transmission of said NAS control information. The RRC layer has similar possibilities as explained before. He might decide e.g. to use both or only one of the two retransmission schemes, thereby avoiding a duplicate retransmission for data packets that have not been correctly received by the eNB.

It may also be that the RLC layer in the UE decides on which retransmission functions to use. Similar to above, the RLC might decide e.g. to transmit the control information with both functions active or to avoid at least one of the two retransmission functionalities.

Resulting from the above, according to the embodiment of the invention, NAS messages are exchanged between the UE and the eNB with only one retransmission function in place.

Another embodiment of the invention provides further advantages as will be discussed below. In the following a scenario will be presented in which no retransmission is necessary at all.

Fig. 8 shows a signaling diagram in which a retransmission of control information is not necessary at all because the control information has become out of date, during the time from the first actual transmission of the control information to the time the retransmission functions realize that a corresponding data packet got lost over the interface. This is illustrated in Fig. 8 in which a UE wants to start a new service. In particular, the UE transmits a Service Request containing a NAS message via the eNB to the aGW. The aGW transmits the reply service request accept also containing a NAS message to the UE. However, this message gets lost on the air interface between the eNB and the UE. Nevertheless, UE sends in the mean time a service release request to the aGW thereby canceling the prior service request. The aGW answers with a service release accept to the UE. This includes that the RRC layer internally updates some appropriate states regarding the current relevance of the control information that is still to be transmitted or that already has been transmitted. Correspondingly, the RRC layer realizes that the control information that got lost over the air interface is not relevant anymore due to the service release request. Therefore, the retransmission function of the RRC layer does not retransmit the control information. However, in the meantime the RLC receiving side detected the missing RLC PDU and reported it with a NACK to the transmitter. In the RLC transmitter at eNB the ARQ mechanism thus retransmits the missing PDU. This causes the retransmission of an already obsolete answer to a now terminated service request. Apparently, in such a case no retransmission would be needed at all.

In the following, possible implementations are discussed by which the particular retransmission functions may be avoided. As already explained, the RLC layer of the eNB or the UE uses a Signaling Radio Bearer in Acknowledged Mode to transmit the RRC DT messages with the control information to the receiving entity. Accordingly, the Automatic Repeat Request function is active to ensure a correct transmission. A usual ARQ is effected based on mainly two aspects. In particular, a maximum waiting time is predetermined that denotes the period of time the transmitting entity waits to receive a positive acknowledgment from the receiving entity about a correct reception of the transmitted data packet. For instance, in case the RLC layer in the eNB transmits a data packet to the UE, the ARQ retransmission function starts a timer for said data packet. It is assumed that said data packet gets lost and that the UE thus does not reply with an ACK message to said data packet. Accordingly, the ARQ still waits till the timer reaches a maximum waiting time, which has been previously set by the RRC layer. Subsequently, the ARQ function engages as there was no acknowledgment message received from the UE, and the ARQ function retransmits the lost data packet.

Another possible option is that when the UE realizes that a data packet is missing, the UE sends a status report, e.g. a NACK, back to the eNB. In said case, the ARQ function immediately retransmits the missing data packet without waiting the maximum response waiting time.

Another aspect of the ARQ of the RLC layer relates to the number of allowable retransmissions for one lost data packet. For instance, an operator may set a retransmission counter to an arbitrary number, that is, when a data packet repeatedly gets lost, the retransmission counter limits the number of possible retransmissions for the same data packet. However, it is advantageous to not set the counter too high, since it might be that in such a case many retransmissions may be triggered that significantly reduce the network performance.

According to some embodiments of the invention in which the ARQ function of the RLC layer shall be avoided it is for example possible to set the maximum response waiting time to an infinite value. Thereby, a retransmission of a lost data packet is not triggered because the ARQ function would wait for the infinite period of time to receive a positive acknowledgment from the receiving entity. However, in case the receiving entity sends a NACK message for the lost data packet to the transmitting entity, a retransmission would still be performed as the infinite waiting time is circumvented. Consequently, in that case it is further necessary to adapt the ARQ function to discard NACK messages regarding the data packets containing the control information.

Another possibility to avoid the ARQ retransmission is to set the retransmission counter to zero. Thereby, though a retransmission would be triggered after a predetermined maximum response waiting time, such a retransmission would not be performed, as no retransmission is allowable due to the retransmission counter being set to zero. This also applies if the receiving entity transmits a negative acknowledgment ( NACK).

It is further possible for the RLC layer to use another Signaling Radio Bearer for transmitting the RLC PDUs comprising the control information, in which the ARQ function is disabled. In particular, usually the RLC layer uses a Signaling Radio Bearer in Acknowledged Mode to transmit data packets containing the NAS control information. Accordingly, the ARQ function is enabled and would engage to rectify transport errors. In order to avoid the retransmission function of the RLC layer, it is advantageous to use a Signaling Radio Bearer in Unacknowledged Mode, since said SRB in Unacknowledged Mode does not support a retransmission protocol. In case such a SRB in Unacknowledged Mode is already available, the transmitting entity would use said SRB to transmit the recognized data packets comprising the NAS messages and avoids thus the retransmission by the RLC layer. Naturally, in case no such SRB is set up already, the RRC layer instructs the RLC layer to establishe a new SRB in Unacknowledged Mode as soon as it determines that it is needed.

In order to avoid the retransmission function of the RRC layer, similar techniques as proposed above are feasible. For instance, the retransmission of the RRC layer may be based on a retransmission counter, in which case it is possible to just set the counter to zero and thus deactivate the RRC retransmission.

Another possibility is that the RRC retransmission is timer based, in which case it is possible to set the maximum response waiting time to infinite. Thereby, a retransmission of a lost data packet is not triggered because the retransmission function of the RRC layer would wait for an infinite period of time to receive a positive acknowledgment from the receiving entity.

However, in the future there may be other or additional mechanisms implemented in the RLC and RRC layer to trigger their respective retransmission functions. In such a case, it is important for the invention, that the particular mechanisms are deactivated for those recognized data packet that contain control information, in order to avoid the retransmission as decided by the RRC layer or RLC layer in the eNB and UE, or as decided by the aGW.

According to another embodiment of the invention, it is possible to control the retransmission functions in any way, which e.g. includes to maintain both function active, to disable one of the two retransmission function or even to disable both functions.

We assume that the RRC layer in the aGW receives control information from the S1-C transport protocol which may be the GTP-C protocol. Based on the indicator in the data packets, the RRC layer recognizes those data packets that comprise the NAS control information. It is further assumed that the RRC layer takes the decision about which retransmissions functions to use for the sending of the control information. Thus, the RRC layer might initially decide to e.g. use only its own function and avoid the transport error correction provided by the ARQ function of the RLC layer. Then, in the scenario of Fig. 8 the RRC layer learns about the service release request of the mobile node and determines that the NAS control information sent before regarding the Accept(Service Request) is no longer relevant. Consequently, it retroactively disables its own retransmission function, thus eliminating any retransmission, because the RLC(ARQ) retransmission was initially disabled and the RRC layer deactivated its own function belatedly. Thereby, any unnecessary retransmissions are completely avoided.

On the other hand, in case the RRC layer initially deactivated its own transport error correction function, as soon as the RRC layer realizes that the previous NAS control information, in this case the Accept(Service Request), is no longer important, it further disables the ARQ function of the RLC layer such that the unnecessary retransmission of the control information, as shown in Fig. 8, does not happen.

In still another alternative, the RLC layer instead of the RRC layer decides on the use of the retransmission functions. In order for the RLC layer to realize that the NAS control information that has just been transmitted has become irrelevant, it is necessary for the RLC layer to repeatedly request the RRC layer about any changes that have happened in the mean time. It is also possible that the RRC layer informs the RLC layer as soon as a relevant change occurs that would affect the immediate retransmission scheme previously decided by the RLC layer.

For instance, there might be the case in which the RLC layer transmits an Accept(Service Request) message within a RRC DT message to the UE, while using only its own retransmission function to assure the safe transmission of the control information. However, in the meantime the UE decides otherwise and accordingly transmits a Service Release message to the aGW, wherein the aGW replies with an Accept(Service Release) message. As already explained in detail, in such a case no retransmission at all would be necessary any more, as the control information has become irrelevant. However, the RLC layer would not know about said state change as in the eNB only the RRC realizes this. Therefore, to effectively avoid unnecessary retransmission, the RLC layer should e.g. periodically request corresponding information from the RRC layer in the eNB. Alternatively, the RRC layer might provide the RLC layer with the relevant information as soon as possible. In any case, the RLC layer should thereby be enabled to realize the change and to also disable its own retransmission function, ARQ. Thus, both retransmission functions are avoided and the traffic load may be lowered, as no retransmission takes place.

Another embodiment of the invention relates to the implementation of the above described various embodiments using hardware and software. It is recognized that the various embodiments of the invention above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the present invention may also be implemented by means of software modules which are executed by a processor or directly in hardware.

Also a combination of software modules and a hardware implementation may be possible. The software modules or instructions may be stored on any kind of computer readable storage media, for example RAM, EPROM, EEPROM, flash memory, registers, hard disks, CD-ROM, DVD, etc.

## Claims

1. A method for exchanging control information between a gateway and a mobile node via a radio control entity, wherein a first retransmission function and a second retransmission function are used between the radio control entity and the mobile node for ensuring the exchange of the control information, the method comprising the step of:
deciding on the use of the first retransmission function and on the use of the second retransmission function for each data packet comprising the control information that is exchanged between the radio control entity and the mobile node.

2. The method of claim 1, wherein the data packets comprising the control information are exchanged between the radio control entity and the mobile node by using at most one of the first and second retransmission function.

3. The method of claims 1 or 2, wherein the first and second retransmission functions respectively correspond to a first and second protocol sublayer of the radio control entity and the mobile node, and the control information is encapsulated by the first protocol sublayer and exchanged between the radio control entity and the mobile node via the second protocol sublayer, wherein the second retransmission function is used between the radio control entity and the mobile node for ensuring the exchange of data, the data comprising the control information.

4. The method of one of claims 1 to 3, further comprising the steps of:
including by the gateway an indicator in the data packets comprising the control information, before transmitting the data packets to the radio control entity, wherein the indicator provides an indication about the use of retransmission for the control information,
upon receiving the data packets comprising the control information, deciding on the use of the first and second retransmission function based on the indicator in the data packets,
forwarding the data packets by the radio control entity to the mobile node by using the decided first retransmission function and the second retransmission function.

5. The method of claim 4, wherein the indicator is included in the data packets by a third protocol sublayer of the gateway used for transmitting the data packets from the gateway to the radio control entity.

6. The method of claims 4 or 5, wherein the indicator indicates that the data packet comprises the control information, and the method further comprises the steps of:
recognizing by the radio control entity the data packet comprising the control information, based on the indicator in the data packet, and
depending on the decision on the use of the first and second retransmission function, avoiding at least one of the first and second retransmission functions for ensuring the transmission of the recognized data packet comprising the control information, before forwarding the recognized data packet to the mobile node.

7. The method of claim 6, wherein the first retransmission function in the radio control entity waits for a predetermined time to receive from the mobile node an acknowledgment indicating that the data packet comprising the control information has been received, before retransmitting the data packet comprising the control information to the mobile node, and
wherein the step of avoiding the first retransmission function sets the predetermined time to an infinite time value.

8. The method of claims 6 or 7, wherein the second retransmission function in the radio control entity is an Automatic Repeat Request function, wherein a maximum retransmission counter limits the number of possible retransmissions for a missing data packet that has not been received in the mobile node, and
wherein the step of avoiding the second retransmission function sets the maximum retransmission counter to zero.

9. The method of claims 6 or 7, wherein the second protocol sublayer in the radio control entity utilizes a first data channel for transmitting data to the mobile node, the first data channel using the second retransmission function to ensure the transmission of data to the mobile node, and
wherein the step of avoiding the second retransmission function in the radio control entity comprises utilizing by the second protocol sublayer a second data channel for transmitting the data packet comprising the control information to the mobile node, the second data channel not using the second retransmission function.

10. The method of claim 9, wherein upon recognizing the data packet comprising the control information, the second protocol sublayer establishes the second data channel in case no data channel is available to the second protocol sublayer, that does not use the second retransmission function.

11. The method of claims 9 or 10, wherein the first data channel is a Signalling Radio Bearer in Acknowledged Mode and the second data channel is a Signalling Radio Bearer in Unacknowledged Mode.

12. The method of claim 11, wherein the second protocol sublayer utilizes the second data channel for transmitting the data packet comprising the control information after switching the Acknowledged Mode of the Signalling Radio Bearer to the Unacknowledged Mode.

13. The method of one of claims 1-12, wherein the indicator in the data packets is a flag or a message type, which is included in a header of the data packets comprising the control information.

14. The method of one of claims 1-13, wherein the indicator in the data packets comprising the control information informs the radio control entity about the decision on the use of the first and second retransmission functions for transmitting the data packets comprising the control information to the mobile node.

15. The method of claims 3-14, further comprising the steps of:
generating by the mobile node data packets comprising the control information,
during the generation of the data packets, identifying the data packets comprising the control information, and
deciding on the use of the first retransmission function and the second retransmission function for ensuring the transmission of the control information from the mobile node to the radio control entity.

16. The method of one of claims 3-15, wherein the first protocol sublayer is a Radio Resource Control sublayer in the radio control entity and the mobile node and the second protocol sublayer is a Radio Link Control sublayer in the radio control entity and the mobile node.

17. The method of one of claims 5-16, wherein the third protocol sublayer is a GPRS Tunneling Protocol sublayer or a Stream Control Transmission Protocol sublayer.

18. The method of one of claims 3-17, wherein the decision on the use of the first retransmission function and the second retransmission function is made in the first or second protocol sublayer.

19. The method of claim 18, wherein in case the decision on the use of the first retransmission function and the second retransmission function is made in the second protocol sublayer, the method further comprises the step of:
requesting information about the control information from the first protocol sublayer, and
wherein the step of deciding is based on the requested information about the control information.

20. A radio control entity for forwarding control information, wherein the control information is exchanged between a gateway and a mobile node via the radio control entity, wherein a first retransmission function and a second retransmission function are used between the radio control entity and the mobile node for ensuring the exchange of the control information, the radio control entity comprising:
a processor adapted to decide on the use of the first retransmission function and the second retransmission function for each data packet comprising the control information that is transmitted to the mobile node.

21. The radio control entity of claim 20, further comprising:
a receiver adapted to receive data packets comprising the control information and further comprising an indicator in the data packets, wherein the indicator provides an indication about the use of retransmission for the control information,
the processor is further adapted to recognize the data packets comprising the control information, based on the indicator,
the processor is further adapted to avoid at least one of the first and second retransmission functions, based on the decision on the use of the first and second retransmission function, and
a transmitter is adapted to forward the data packets to the mobile node.

22. The radio control entity of claims 20 or 21, wherein the first retransmission function in the radio control entity waits for a predetermined time to receive from the mobile node an acknowledgment indicating that the data packet comprising the control information has been received, before retransmitting the data packet comprising the control information to the mobile node, and
wherein the processor is adapted to avoid the first retransmission function by setting the predetermined time to an infinite time value.

23. The radio control entity of one of claims 20 to 22, wherein the second retransmission function in the radio control entity is used between the radio control entity and the mobile node for ensuring the exchange of data and is an Automatic Repeat Request function, wherein a maximum retransmission counter limits the number of possible retransmissions for a missing data packet that has not been received in the mobile node, and
wherein the processor is adapted to avoid the second retransmission function by setting the maximum retransmission counter to zero.

24. The radio control entity of one of claims 20 to 22, wherein a second protocol sublayer in the radio control entity utilizes a first data channel for transmitting data to the mobile node, the first data channel using the second retransmission function to ensure the transmission of data to the mobile node, and
wherein the processor is adapted to avoid the second retransmission function in the radio control entity by utilizing by the second protocol sublayer a second data channel for transmitting the data packet comprising the control information to the mobile node, the second data channel not using the second retransmission function.

25. The radio control entity of one of claims 20 to 24, further comprising means to perform or participate in the steps of the method according to one of the claims 1 to 19.

26. A mobile node for exchanging control information with a gateway via a radio control entity, wherein a first retransmission function and a second retransmission function are used between the radio control entity and the mobile node for ensuring the exchange of the control information, the mobile node comprising:
a processor adapted to decide on the use of the first retransmission function and the second retransmission function for each data packet comprising the control information that is transmitted to the gateway.

27. The mobile node of claim 26, wherein:
the processor is further adapted to generate data packets comprising the control information, and during the generation of the data packets, is further adapted to identify the data packets comprising the control information,
the processor is further adapted to avoid at least one of the first and second retransmission functions, based on the decision on the use of the first and second retransmission function, and
a transmitter is adapted to transmit the data packets comprising the control information to the radio control entity.

28. The mobile node of claims 26 or 27, wherein the first retransmission function in the mobile node waits for a predetermined time to receive from the radio control entity an acknowledgment indicating that the data packet comprising the control information has been received, before retransmitting the data packet comprising the control information to the radio control entity, and
wherein the processor is adapted to avoid the first retransmission function by setting the predetermined time to an infinite time value.

29. The mobile node of one of claims 26 to 28, wherein the second retransmission function in the mobile node is used between the radio control entity and the mobile node for ensuring the exchange of data and is an Automatic Repeat Request function, wherein a maximum retransmission counter limits the number of possible retransmissions for a missing data packet that has not been received in the radio control entity, and
wherein the processor is adapted to avoid the second retransmission function by setting the maximum retransmission counter to zero.

30. The mobile node of one of claims 26 to 28, wherein a second protocol sublayer in the radio control entity utilizes a first data channel for transmitting data to the mobile node, the first data channel using the second retransmission function to ensure the transmission of data to the mobile node, and
wherein the processor is adapted to avoid the second retransmission function in the mobile node by utilizing by the second protocol sublayer a second data channel for transmitting the data packet comprising the control information to the radio control entity, the second data channel not using the second retransmission function.

31. The mobile node of one of claims 26 to 30, further comprising means to perform or participate in the steps of the method according to one of the claims 1 to 19.

32. A gateway for exchanging control information with a mobile node via a radio control entity, wherein a first retransmission function and a second retransmission function are used between the radio control entity and the mobile node for ensuring the exchange of the control information, the mobile node comprising:
a processor adapted to decide on the use of the first retransmission function and the second retransmission function for each data packet comprising the control information that is transmitted to the mobile node.

33. The gateway of claim 32, wherein:
the processor is further adapted to generate data packets comprising the control information and to include an indicator in the data packets comprising the control information, wherein the indicator provides an indication about the decision on the use of the first and second retransmission function, and
a transmitter is adapted to transmit the data packets comprising the control information to the radio control entity.

34. The gateway of claim 33, wherein the indicator is included in the data packets by a third protocol sublayer of the gateway used for transmitting the data packets from the gateway to the radio control entity.

35. The gateway of claims 33 or 34, wherein the indicator in the data packets is a flag or a message type, which is included in a header of the data packets comprising the control information.

36. The gateway of one of claims 32 to 35, further comprising means to perform or participate in the steps of the method according to one of the claims 1 to 19.

37. A data packet comprising control information exchanged between a gateway and a mobile node via a radio control entity, wherein a first retransmission function is used between the radio control entity and the mobile node for ensuring the exchange of the control information, and a second retransmission function is used between the radio control entity and the mobile node for ensuring the exchange of the data packet, the data packet comprising a header section and a payload section, wherein the payload section includes the control information and the header section includes an indicator that provides an indication about the use of the first and second retransmission function.

38. The data packet of claim 37, wherein the indicator in the header is a flag or message type.

39. A communication system comprising a radio control entity according to one of claims 20 to 25, a mobile node according to one of claims 26 to 31 and a gateway according to claims 32 or 35.
